Europäisches Patentamt

European Patent Office·

Office européen des brevets

(19)

(11) Publication number: **0 010 323**
**B1**

(12) **EUROPEAN PATENT SPECIFICATION**

(45) Date of publication of patent specification: **21.03.84**

(51) Int. Cl.³: **G 03 F 3/08**

(21) Application number: **79200559.7**

(22) Date of filing: **03.10.79**

(54) A method for producing orthogonally screened colour separation images.

(30) Priority: **04.10.78 NL 7810032**

(43) Date of publication of application:
**30.04.80 Bulletin 80/9**

(45) Publication of the grant of the patent:
**21.03.84 Bulletin 84/12**

(84) Designated Contracting States:
**CH DE FR GB**

(56) References cited:
**GB - A - 1 497 468**

**DER POLYGRAPH, no. 5, 1974, Frankfurt (DE),
GAST: "Elektronisches Rastern von
Farbauszügen", pages 286,287**

(73) Proprietor: **STORK BRABANT B.V.
43a Wim de Körverstraat
NL-5831 AN Boxmeer (NL)**

(72) Inventor: **Boogaard, Leendert Arie
12 Jan Mostartstraat
NL-5831 VB BOXMEER (NL)**
Inventor: **Barendregt, Frank
1 Corn. Ketelstraat
NL-5831 TZ BOXMEER (NL)**

(74) Representative: **Timmers, Cornelis Herman
Johannes et al,
EXTERPATENT Willem Witsenplein 4
NL-2596 BK 's-Gravenhage (NL)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

## A method for producing orthogonally screened colour separation images

This invention relates to a method for synthesizing a set of screened colour separation images from an original composed of at least two different colours through the use of optical scanning, in which the original is carried on a cylindrical surface which is rotated while a scanning beam is caused to move in two directions relative to the cylinder surface carrying said original, one direction (X) being substantially parallel with the axis of the cylinder and the other direction (Y) being substantially perpendicular to said axis, the scanning mechanism being arranged to produce scanning points for reproduction at locations along the path of movement in said perpendicular direction, each separation image being synthesized in a program of movements of said beam relative to said cylinder which scans a predetermined area comprising at most all of said original and there being as many programs as separation images, comprising the steps of establishing a base line on said cylinder which is parallel to the cylinder axis; scanning the surface of said cylinder in a first program of movements of said beam for the first colour which program will include said area of said original and which is composed of movements in two directions and sequentially generating discrete scanning point signals from scanning points spaced along the lengths of the consecutive perpendicular lines, the resulting field of scanning points if developed in a plane from the surface of the cylinder being rectangular and including said area, the lower horizontal edge of said field being coincident with said base line and one of its vertical edges being perpendicular to said base line, all of the scanning points occurring above the base line and forming two sets of parallel lines, each set being orthogonal relative to the other, one set being at an angle $\alpha$ relative to said vertical edge; producing a first separation image from the scanning point signals derived from said field which fall on said area of said original, each signal being adapted to form a printing element and the printing elements being respectively coincident with the scanning points of said field which fall on said image whereby said image is reproduced on said separation image; repeating the abovementioned steps one for each remaining colour and utilizing the identical base line and commenting the scanning at the identical point at which the first scanning program was commenced by the second separation image differing from the first in that the angle relative to said vertical edge of the second field is a certain angle $\alpha_2$ different from the first mentioned angle $\alpha$ whereby there is a predetermined angular disposition of said one set of parallel lines of the one separation image relative to the corresponding set of parallel lines of said second separation image, such as known from GB 1497468 (Brucker).

In the art of colour reproduction such as printing, it is common practice to prevent the occurrence of Moire effects in the finished product by using different screen angles relative to a reference direction or pattern for the colour separation images produced from an original image, screen ruling of the separation images being equal. The colours used for the separation images generally are yellow, magenta, cyan and black. The different angles with the reference direction or pattern are formed by lines connecting the dots in the several separation images.

By using the abovementioned known method indeed colour separations with different screen angles are obtained but these separations have the drawback that the sizes of the elementary cells of which the screens consist are not constant, so that the final result is different from the one obtained by purely optical methods.

The invention obviates this drawback. According to the invention of said movements in two directions (X,Y) one (X) is axial and undirectional and the other (Y) is substantially perpendicular to the axis and also undirectional in such a manner that consecutive perpendicular lines of movement are traced by said beam which are spaced by a second spacing equal distances apart along the length of the cylinder, each perpendicular line of movement being a full circle of said cylinder; said scanning points having a certain first spacing relative to one another and the first point of each perpendicular line which is defined by the beam passing the base line to start scanning having a certain third spacing above said base line, there being a fourth spacing between the lines of each set and said fourth spacing being equal for both sets, the first, second and fourth spacings not necessarily being equal to one another but all these spacings being constant for that particular program and the third spacing being not necessarily the same for the different perpendicular lines and being related to the order of scanning occurrence of a given perpendicular line with respect to the adjacent perpendicular lines, the relation being given by trigonometrical and geometric relationships which take the different spacing and said angle $\alpha$ into account, the fourth spacing of all fields being equal and the dimensions of the separation images having the same proportional dimensions as said fields, the corresponding field dimensions being equal, respectively, wherein the said trigonometrical and geometrical relationships are expressed as follows:

A. $\quad tg\alpha = \dfrac{u}{v}$

with the conditions:

$0 \leqslant \alpha \leqslant 90°$

$u \geqslant 0$ and integer

$v \geqslant 0$ and integer

$|u-v|$ is minimum

B. $l_1 = a\sqrt{u^2+v^2}$

C. $l_2 = \dfrac{a}{\sqrt{u^2+v^2}}$

D. $l_3 = \beta l_1$ with $\beta = [m - \text{integer}(m)]$

and $m = \dfrac{np}{u^2+v^2}$

and $p = su+tv$ and $t = \dfrac{sv+1}{u}$

with the conditions:

$p \geqslant 0$ and integer

$s \geqslant 0$ and integer

$t \geqslant 0$ and integer

$|s-t|$ is minimum

$0 \leqslant n \leqslant u^2+v^2$ and integer.

Instead of arriving at every dot in two movements, namely a scanning movement along a line and a deflection from said line according to the invention the scanning head is only moved in the direction of the axis of the scanning cylinder after a complete revolution thereof. The thus obtained screen is exactly orthogonal with cells of mutual equal size.

The invention will be illustrated with reference to the drawings, in which:—

Figure 1 is a block and schematic diagram which illustrates a device for effecting the method of the invention;

Figure 2 is a chart or layout illustrating the screen pattern used for printing a yellow separation image;

Figure 3 is the same as Figure 2 but for printing a magenta separation image;

Figure 4 is the same as Figure 2 but for printing a cyan separation image; and

Figure 5 is the same as Figure 2 but for printing a black separation image.

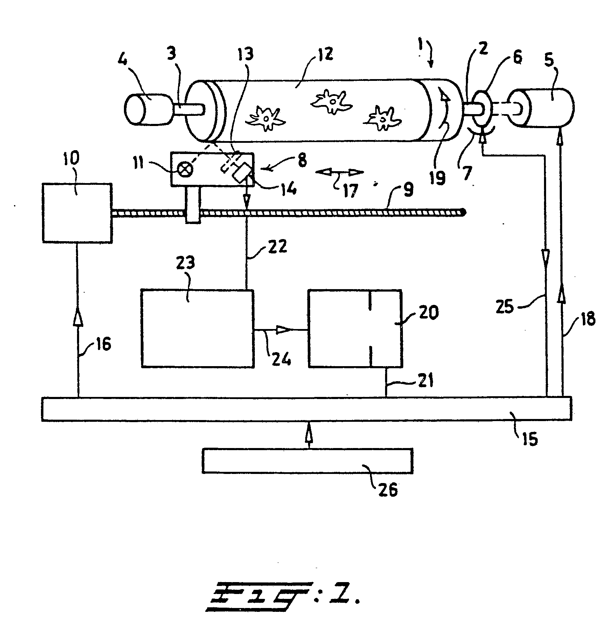

Figure 1 schematically shows a device with which the method in accordance with the invention may be carried out.

This installation consists of a drum 1 which may be rotated on its axles 2 and 3 which are supported respectively, on a bearing 4 and on the bearings of a stepping motor 5. A position indicator disc 6 is mounted on axle 2 and cooperates with a detector 7, such as an optical detector, which is mounted adjacent disc 6 and which senses marks applied on the disc. Disc 6 and detector 7 cooperate to provide information concerning the angular position of the axle and the drum. An optical scanner 8 is mounted for movement parallel to the drum axis and is driven by a spindle 9 which in turn is driven by a drive mechanism 10. The optical scanner 8 comprises a light source 11 from which collimated light is directed onto the surface of an original image 12 which is mounted on drum 1 and which is to be scanned. The light from the source 11 which is reflected from the original image 12 passes through a colour filter 13 to a photoelectric detector 14 which produces electric signals which are representative of the colour density in a scanned point of the original image. Such devices are known in the art.

Signals produced by the photoelectric detector 14 may be used, for example, for the control of a tool. For instance, a cutting tool may be controlled to act on the surface of a printing drum on which the printing screen is to be formed and where the extent of machining of the surface such as the depth of the cutting of the surface for each basic colour is governed by the detector output signals. According to the invention, scanning of the original image 12 is performed in a well defined pattern.

Scanning is governed by a numerical drive control device 15 which controls movement of optical scanner 8 in a direction parallel to the axis of cylinder 1, as shown by double arrow 17, through drive mechanism 10 via line 16. Control device 15 also controls the stepped angular rotation of drum 1 in the direction of arrow 19 through drive mechanism 5 via line 18. Information concerning the position of the optical scanner 8 and angular position of drum 1 is fed by control device 15 to the memory unit 20 via line 21.

The output signal of detector 14 is fed to analogue digital converter 23 via line 22 and converted digital information representing the colour density in a scanned point is fed to memory 20 via line 24. The digital colour density information is combined in memory 20 with information concerning the axial position of the optical scanner 8 and with information concerning the angular position of drum 1, the angular position information being obtained from detector 7 via line 25.

The information which is stored in memory 20 in this manner may be recalled at any desired moment and may be used for controlling a printing plate surface machining device which is known and which is not shown in the drawings. The whole assembly is controlled by a central processing unit 26. It is observed that a device as described hereinbefore is no part of the invention.

A colour original image is scanned in steps, point by point, with a photoelectric converter which is equipped with a suitable filter so as to provide electric signals which are a function of the colour density in each of the scanned points. The colour scanned is governed by the type of filter used and scanning for the different colours is carried out in mutually exclusive patterns.

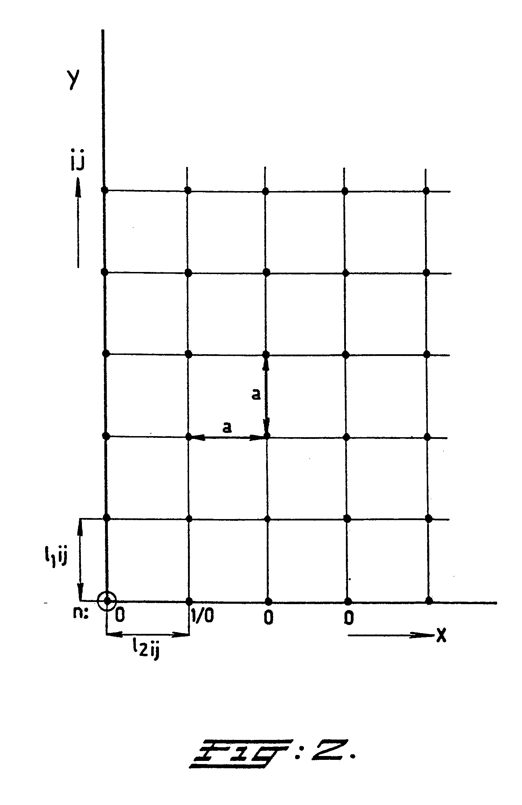

Figure 2 shows the pattern in which the original image is scanned for the colour yellow. This scanning pattern has two mutually perpendicular scanning directions, the X direction and the Y direction, respectively and scanning begins from an origin, O. The X direction is parallel to the line which was previously described as the base line, with the Y direction being perpendicular to the base line; the X-axis being equivalent to the base line. As described hereinabove, the original image is mounted on a surface of a drum or cylinder which is rotatably driven while the scanning device is moved parallel to the cylinder axis, the drum rotation being in the Y-direction and the scanning device movement being in the X-direction. Point to point scanning is performed in the Y-direction, starting from a base line, with equal distances of $l_{1y}$ between the scanning points, until the base line is reached again. The scanning device then is displaced a certain distance $l_{2y}$ in the X-direction and scanning in the Y-direction is continued.

A. For the colour yellow the tangent of the angle $\alpha_y$ is chosen zero:

$$tg\alpha_y = 0, \text{ so } u = 0 \text{ and } v = 1$$

B. According to the trigonometric relationship

$$l_1 = a\sqrt{u^2 + v^2}$$
$$l_{1y} = a$$

C. According to the trigonometric relationship

$$l_2 = \frac{a}{\sqrt{u^2 + v^2}}$$
$$l_{2y} = a$$

D. The condition $0 \leqslant n \leqslant u^2 + v^2$ requires that $n = 0$ or $n = 1$.
According to equations (1), (2) and (3) for $n = 0$, $m = 0$ and $\beta = 0$ so $l_{3y}(n=0) = 0$
and for
$n = 1$, $m = p$ and $\beta = (p-p) = 0$, so
$l_{3y}(n=1) = 0$.

It appears that after one revolution of the cylinder the distance $l_{3m}$ equals zero, so the first scanned point is situated again on the base line and this point may be considered the origin. Scanning is continued for the entire original image following this procedure.

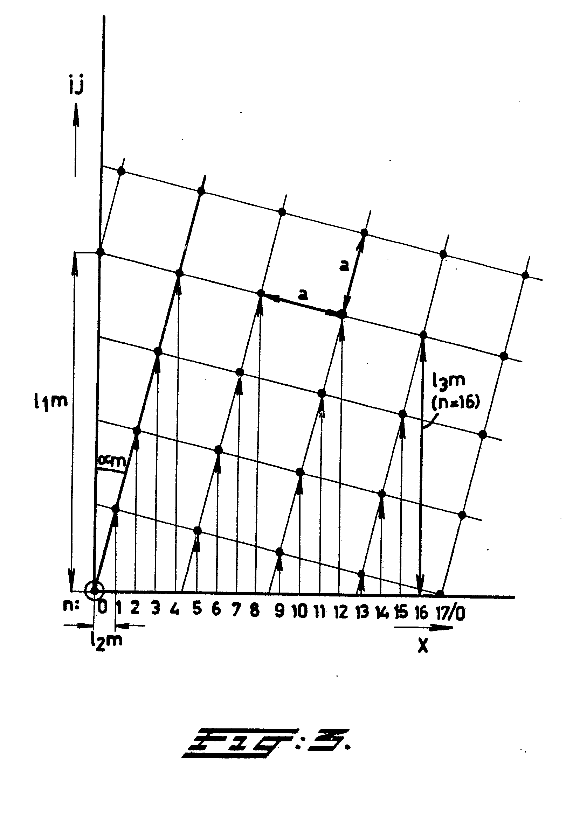

Figure 3 shows the pattern in which the original image is scanned for the colour magenta.

A. For the colour magenta the tangent of the angle $\alpha_m$ is chosen 1/4:

$$tan\alpha_m = 1/4, \text{ so } u + 1 \text{ and } v = 4$$

B. According to the trigonometrical relationship

$$l_1 = a\sqrt{u^2 + v^2}$$
$$l_{1m} = a\sqrt{17}$$

C. According to the trigonometrical relationship

$$l_2 = \frac{a}{\sqrt{u^2 + v^2}}$$
$$l_{2m} = \frac{1}{17}a\sqrt{17}$$

D. According to equation (5):

$$t = 4s + 1, \text{ so } s = 0 \text{ and } t = 1$$

According to equation (4):

$$p = 4$$

and according to equation (3):

$$m = \frac{4}{17}n$$

According to equation (2):

$$\beta = \{\frac{4}{17}n - integer(\frac{4}{17}n)\}$$

Example: For the scanning line with $n = 16$:

$$m = \frac{4 \times 16}{17}$$

and integer $(m) = 3$ and

$$l_{3m}(n=16) = (\frac{4 \times 16}{17} - 3)a\sqrt{17} = \frac{13}{17}a\sqrt{17}$$

It appears that after 17 revolutions of the cylinder $l_{3m}$ equals zero, so the first scanned point is situated again on the base line and this point may be considered the origin.

Scanning is continued for the entire original image following this procedure.

In this way, an essentially orthogonal screen pattern is obtained in which the spacing, as in the case of the colour yellow pattern, equals $a$, but in which the screen pattern relative to the Y-axis is rotated to the right over an angle $\alpha_m$, equal to approximately 15 degrees, around the origin O.

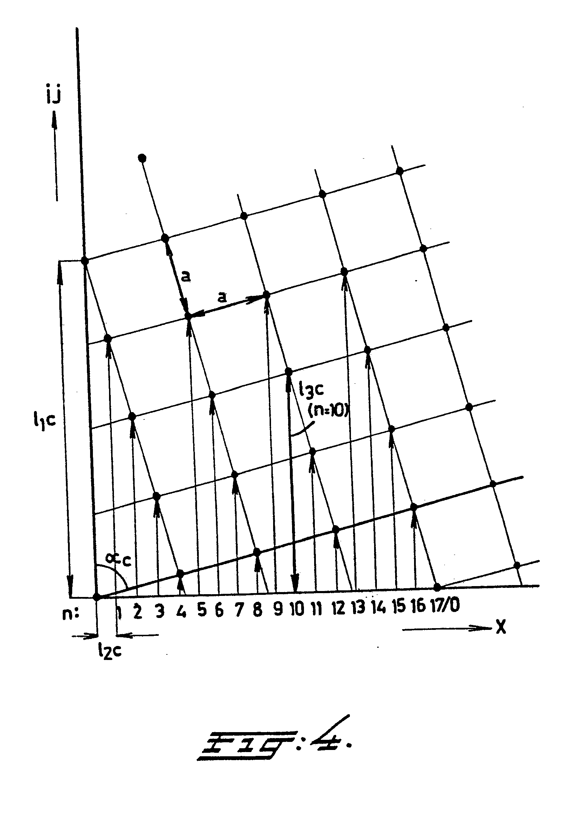

Figure 4 shows the pattern in which the original image is scanned for the colour cyan.

A. For the colour cyan the tangent of the angle $\alpha_c$ is chosen 4:

$$\tan\alpha_c=4, \text{ so } u=4 \text{ and } v=1$$

B. According to the trigonometrical relationship

$$I_1=a\sqrt{u^2+v^2}$$
$$I_{1c}=a\sqrt{17}$$

C. According to the trigonometrical relationship

$$I_2=\frac{a}{\sqrt{u^2+v^2}}$$
$$I_{2c}=\frac{1}{17}a\sqrt{17}$$

D. According to equation (5):

$$t=\frac{s+1}{4} \text{ so } s=3 \text{ and } t=1$$

According to equation (4):

$$p=13$$

and according to equation (3):

$$m=\frac{13}{17}n$$

According to equation (2):

$$\beta=\{\frac{13}{17}n-\text{integer}(\frac{13}{17}n)\}.$$

Example: For the scanning line with $n=10$:

$$m=\frac{10\times13}{17}$$

and integer $(m)=7$ and

$$I_{3c}(n=10)=(\frac{10\times13}{17}-7)a\sqrt{17}=\frac{11}{17}a\sqrt{17}$$

It appears that after 17 revolutions of the cylinder $I_{3c}$ equals zero, so the first scanned point is situated again on the base line and this point may be considered the origin. Scanning is continued for the entire original image following this procedure.

In this manner of scanning an essentially orthogonally screened separation image is obtained in which the spacing, as in the case of the separation images for the colours yellow and magenta, is equal to $a$, but in which the screen pattern relative to the Y-axis is rotated to the right around the origin $O$, an angle $\alpha_c$ equal to approximately 75 degrees.

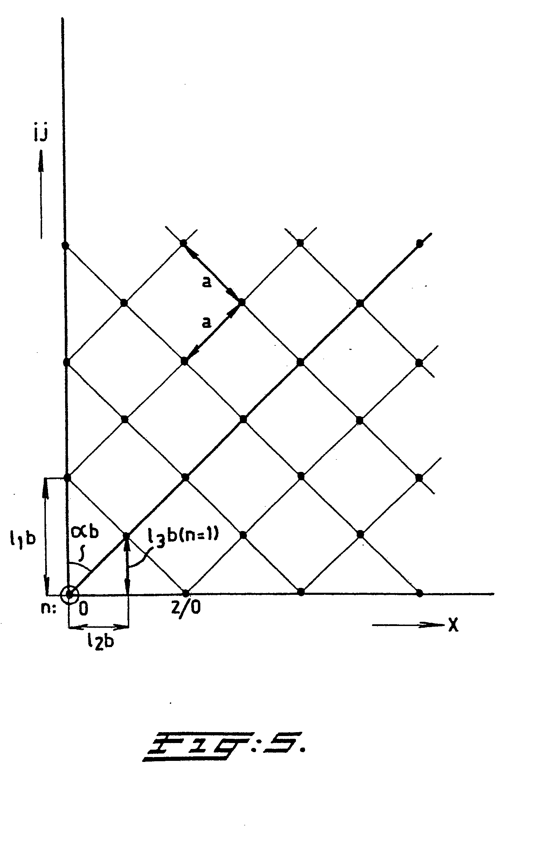

The screen pattern for the colour black, finally, is formed as shown in Figure 5.

A. Here the tangent of the angle $\alpha_b$ is chosen 1:

$$\tan\alpha_b=1, \text{ so } u=1 \text{ and } v=1$$

B. According to the trigonometrical relationship

$$I_1=a\sqrt{u^2+v^2}$$
$$I_{1b}=a\sqrt{2}$$

C. According to the trigonometrical relationship

$$I_2=\frac{a}{\sqrt{u^2+v^2}}.$$
$$I_{2b}=\frac{1}{2}a\sqrt{2}$$

D. According to equation (5):

$$t=s+1, \text{ so } s=0 \text{ and } t=1$$

According to equation (4):

$$p=1$$

and according to equation (3):

$$m=\frac{1}{2}n$$

According to equation (2):

$$\beta=\{\frac{1}{2}n-\text{integer}(\frac{1}{2}n)\}.$$

For the scanning line with $n=1$:

$$m=\frac{1}{2} \text{ and integer } (m)=0$$
and
$$I_{3b}(n=1)=(\frac{1}{2}-0)a\sqrt{2}=\frac{1}{2}a\sqrt{2}.$$

It appears that after two revolutions of the cylinder $I_{3b}$ equals zero, so the first scanned point is situated again on the base line and this point may be considered the origin. Scanning is continued for the entire original image following this procedure.

The resulting screened black separation image has a spacing (a) equal to the spacing of the other colours and is rotated to the right with respect to the Y-axis over an angle $\alpha_b$ equal to 45 degrees.

In the foregoing description, it is assumed that the Y-axis is perpendicular to the X-axis.

If the drive mechanism 10 continuously advances the optical scanner 8 instead of stepping optical scanner 8, while the drum is continuously rotated, a helix is described across the surface of the original image. The angle between the X-axis and Y-axis then is not exactly 90 degrees but is a very minute and negligible deviation from this value. To measure this deviation, we may assume the case of a cylinder circumference of 50 centimeters and a spacing of 1/50 centimeters. Using the scanning pattern for the colour yellow, where the greatest deviation will occur, we obtain an angular deviation of which the tangent is 1/2,500. This results in an angular deviation of 0.023 degrees, or less than 1 minute, 30 seconds.

It is seen that the invention achieves a method for making colour separations for printing especially. The invention may be employed to make negatives from which the printing plates are processed or may be used with certain known techniques to make the plates directly. The invention achieves its ends without the use of actual screens but when the separations are made the same effects are apparent.

Modifications and variations of the present invention are possible in the light of the above teachings. It is therefore, to be understood that within the scope of the appending claims, the invention may be practiced otherwise than as specifically described.

## Claim

1. A method for synthesizing a set of screened colour separation images from an original composed of at least two different colours through the use of optical scanning, in which the original is carried on a cylindrical surface which is rotated while a scanning beam is caused to move in two directions relative to the cylinder surface (1) carrying said original, one direction (X) being substantially parallel with the axis of the cylinder and the other direction (Y) being substantially perpendicular to said axis, the scanning mechanism being arranged to produce scanning points for reproduction at locations along the path of movement in said perpendicular direction, each separation image being synthesized in a program of movements of said beam relative to said cylinder (1) which scans a predetermined area comprising at most all of said original and there being as many programs as separation images, comprising the steps of:

establishing a base line on said cylinder (1) which is parallel to the cylinder axis;
scanning the surface of said cylinder (1) in a first program of movements of said beam for the first colour which program will include said area of said original and which is composed of movements in two directions and sequentially generating discrete scanning point signals from scanning points spaced along the lengths of the consecutive perpendicular lines, the resulting field of scanning points if developed in a plane from the surface of the cylinder being rectangular and including said area, the lower horizontal edge of said field being coincident with said base line and one of its vertical edges being perpendicular to said base line, all of the scanning points occurring above the base line and forming two sets of parallel lines, each set being orthogonal relative to the other, one set being at an angle ($\alpha$) relative to said vertical edge;
producing a first separation image from the scanning point signals derived from said field which fall on said area of said original, each signal being adapted to form a printing element and the printing elements being respectively coincident with the scanning points of said field which fall on said image whereby said image is reproduced on said separation image;
repeating the abovementioned steps one for each remaining colour and utilizing the identical base line and commencing the scanning at the identical point at which the first scanning program was commenced but the second separation image differing from the first in that the angle relative to said vertical edge of the second field is a certain angle ($\alpha_2$) different from the first mentioned angle ($\alpha$) whereby there is a predetermined angular disposition of said one set of parallel lines of the one separation image relative to the corresponding set of parallel lines of said second separation image, characterized in that of said movements in two directions (X,Y) one (X) is axial and undirectional and the other (Y) is substantially perpendicular to the axis and also undirectional in such a manner that consecutive perpendicular lines of movement are traced by said beam which are spaced by a second spacing ($l_2$) equal distances apart along the length of the cylinder, each perpendicular line of movement being a full circle of said cylinder (1); said scanning points having a certain first spacing ($l_1$) relative to one another and the first point of each perpendicular line which is defined by the beam passing the base line to start scanning having a certain third spacing ($l_3$) above said base line, there being a fourth spacing (a) between the lines of each set and said fourth spacing being equal for both sets, the first, second and fourth spacings ($l_1$, $l_2$, a) not necessarily being equal to one another but all these spacings being constant for that particular program and the third spacing ($l_3$) being not necessarily the same for the different perpendicular lines and being related to the order of scanning occurrence of a given perpendicular line with respect to the adjacent perpendicular lines, the relation being given by trigonometrical and geometrical relationships which take the different spacings and said angle $\alpha$ into account, the fourth spacing (a) of all fields being equal and the dimensions of the separation images having the same proportional dimensions as said fields, the corresponding field dimensions being equal, respectively, wherein the said trigonometrical and geometric relationships are expressed as follows:

A.    $\text{tg}\alpha = \dfrac{u}{v}$

with the conditions:
$0 \leqslant \alpha \leqslant 90°$
$u \geqslant 0$ and integer
$v \geqslant 0$ and integer
$|u-v|$ is minimum

B.    $l_1 = a\sqrt{u^2+v^2}$

C.    $l_2 = \dfrac{a}{\sqrt{u^2+v^2}}$

D.    $l_3 = \beta l_1$ with $\beta = [m - \text{integer}(m)]$

and $m = \dfrac{np}{u^2+v^2}$

and $p = su + tv$ and $t = \dfrac{sv+1}{u}$

with the conditions:
$p \geqslant 0$ and integer
$s \geqslant 0$ and integer
$t \geqslant 0$ and integer
$|s-t|$ is minimum
$0 \leqslant n \leqslant u^2+v^2$ and integer.

**Patentanspruch**

1. Verfahren für die Synthese eines Satzes von gerasterten Farbauszügen von einem aus wenigstens zwei verschiedenen Farben zusammengesetzten Original unter Anwendung von optischer Abtastung, bei welchem das Original von einer zylindrischen Fläche getragen wird, welche in Drehung versetzt wird, während ein Abtaststrahl in zwei Richtungen relativ zu der das Original tragenden Zylinderoberfläche (1) in Bewegung gehalten wird, von denen die eine Richtung (X) im wesentlichen parallel mit der Achse des Zylinders ist und die andere Richtung im wesentlichen lotrecht zu der Achse verläuft, bei welchem ferner der Abtastmechanismus für die Erzeugung von der Reproduktion dienenden Abtastpunkten entlang der Bewegungsbahn in der lotrechten Richtung eingerichtet ist, und bei welchem jeder Auszug in einem Programm von Bewegungen des Strahls relativ zu dem Zylinder (1), während welchem er eine höchstens die gesamte Vorlage umfassende vorbestimmte Fläche abtastet, synthetisiert wird, wobei so viele Programme wie Auszüge vorhanden sind, und welches die folgenden Schritte umfaßt:

die Einrichtung einer Grundlinie auf dem Zylinder (1), welche parallel zur Zylinderachse ist;

das Abtasten der Oberfläche des Zylinders (1) in einem ersten Programm von Bewegungen des Strahls für die erste Farbe, wobei das Programm die Fläche des Originals einschließt und aus Bewegungen in zwei Richtungen zusammengesetzt ist, und die Erzeugung einer Folge von diskreten Abtastpunktsignalen von in Abständen entlang der Länge der aufeinanderfolgenden lotrechten Linien angeordneten Abtastpunkten, wobei das sich ergebende Feld von Abtastpunkten bei Abrollung von der Oberfläche des Zylinders in eine Ebene rechteckig ist und die genannte Fläche einschließt, der untere waagerechte Rand des Felds mit der Grundlinie zusammenfällt und einer seiner senkrechten Ränder lotrecht zur Grundlinie verläuft und wobei alle Abtastpunkte oberhalb der Grundlinie auftreten und zwei Sätze von parallelen Linien bilden von denen jeder Satz relativ zum anderen orthogonal ist und ein Satz in einem Winkel $(\alpha)$ relativ zu dem lotrechten Rand liegt;

das Erzeugen eines ersten Auszugs aus den von dem Feld abgenommenen Abtastpunktsignalen, welche auf die Fläche des Originals entfallen, wobei jedes Signal geeignet ist, ein Druckelement zu bilden und die Druckelemente mit den Abtastpunkten des Felds, welche auf das Bild entfallen, zusammenfallen, wodurch das Bild in dem Auszug reproduziert wird;

das Wiederholen der vorgenannten Schritte für jede verbleibende Farbe unter Verwendung der gleichen Grundlinie und mit Beginn der Abtastung an dem gleichen Punkt, an welchem das erste Abtastprogramm begonnen wurde, wobei sich jedoch der zweite Bildauszug von Ersten darin unterscheidet, daß der Winkel relativ zu dem senkrechten Rand des zweiten Felds ein bestimmter, von dem zuerst erwähnten Winkel $(\alpha)$ verschiedener Winkel $(\alpha_2)$ ist, wodurch eine vorbestimmte Winkelbeziehung des einen Satzen paralleler Linien des einen Bildauszugs relativ zu dem entsprechenden Satz paralleler Linien des zweiten Bildauszugs vorhanden ist, dadurch gekennzeichnet, daß

von den Bewegungen in zwei Richtungen (X) die eine (X) axial und unidirektional und die andere (Y) im wesentlichen lotrecht zur Achse und ebenfalls unidirektional ist, derart, daß der Strahl aufeinander folgende lotrechte Bewegungslinien beschreibt, welche über die Länge des Zylinders (1) durch einen gleichbleibenden zweiten Abstand $(l_2)$ voneinander getrennt sind, wobei jede lotrechte Bewegungslinie einen vollen Kreis des Zylinders (1) darstellt;

daß die Abtastpunkte einen bestimmten ersten Abstand ($l_1$) relativ zueinander aufweisen und der erste Punkt jeder lotrechten Linie, welcher durch den Durchgang des Strahls durch die Grundlinie zu Beginn des Abtastens definiert ist, einen bestimmten dritten Abstand ($l_3$) oberhalb der Grundlinie hat, wobei ein vierter Abstand (a) zwischen den Linien jedes Satzes vorhanden ist, welcher für beide Sätze gleich groß ist, wobei ferner der erste, der zweite und der vierte Abstand ($l_1$, $l_2$, a) untereinander nicht unbedingt gleich, jedoch für das jeweilige Programm konstant sind und der dritte Abstand ($l_3$) für die verschiedenen lotrechten Linien nicht unbedingt der Gleiche ist und in Beziehung zur Reihenfolge der Abtastung einer gegebenen lotrechten Linie in bezug auf die benachbarten lotrechten Linien steht, wobei ferner diese Beziehung durch die verschiedenen Abstände und den Winkel $\alpha$ in Betracht ziehende trigonometrische und geometrische Beziehungen bestimmt ist, der vierte Abstand (a) für alle Felder der Gleiche ist und die Abmessungen der Bildauszüge die gleichen proportionalen Dimensionen haben wie die Felder, die korrespondierenden Feldabmessungen jeweils gleich sind und wobei die genannten trigonometrischen und geometrischen Beziehungen wie folgt ausgedrückt werden:

A.    $\tan\alpha = \dfrac{u}{v}$

unter der Bedingung daß:
$$0 \leqslant \alpha \leqslant 90°$$
$$u \geqslant 0 \text{ und ganzzahlig}$$
$$v \geqslant 0 \text{ und ganzzahlig}$$
$$u - v = \text{Minimum}$$

B.    $l_1 = a\sqrt{u^2 + v^2}$

C.    $l_2 = \dfrac{a}{\sqrt{u^2 + v^2}}$

D.    $l_3 = \beta l_1$ mit $\beta = (m - \text{ganzzahlig}(m))$

und $m = \dfrac{np}{u^2 + v^2}$

und $p = su + tv$ und $t = \dfrac{sv + 1}{u}$

unter der Bedingung, daß:
$$p \geqslant 0 \text{ und ganzzahlig}$$
$$s \geqslant 0 \text{ und ganzzahlig}$$
$$t \geqslant 0 \text{ und ganzzahlig}$$
$$s - t = \text{Minimum}$$
$$0 \leqslant n \leqslant u^2 + v^2 \text{ und ganzzahlig.}$$

**Revendication**

1. Procédé permettant de synthétiser un ensemble d'images de séparation de couleurs mises sur écran à partir d'un original composé d'au moins deux couleurs différentes par l'utilisation d'une analyse optique, dans laquelle l'original est porté sur une surface cylindrique qui est entraînée en rotation pendant qu'un faisceau d'analyse est déplacé selon deux directions par rapport à la surface du cylindre (1) portant ledit original, une direction (X) étant sensiblement parallèle à l'axe du cylindre et l'autre direction (Y) étant sensiblement perpendiculaire audit axe, le mécanisme d'analyse étant agencé pour produire des points d'analyse pour reproduction à des emplacements le long du trajet de déplacement dans ladite direction perpendiculaire, chaque image de séparation étant synthétisée dans un programme de mouvement dudit faisceau par rapport audit cylindre (1) qui analyse une zone prédéterminée comprenant au plus tout ledit original, autant de programmes étant prévus qu'il y a d'images de séparation, comprenant les étapes suivantes:

l'établissement d'une ligne de base sur ledit cylindre (1) qui est parallèle à l'axe du cylindre;

l'analyse de la surface dudit cylindre (1) selon on premier programme de mouvements dudit faisceau pour la première couleur, programme qui comprendra ladite zone dudit original et qui se compose de mouvements dans deux directions et

la génération séquentielle discrète de signaux de points d'analyse à partir de points d'analyse espacés sur toute la longueur des lignes perpendiculaires consécutives, le champ résultant de points d'analyse, s'il se développe dans un plan à partir de la surface du cylindre, étant rectangulaire et comprenant ladite zone, le bord horizontal inférieur dudit champ étant coïncidant avec ladite ligne de base et un de ses bords verticaux étant perpendiculaires à ladite ligne de base, tous les points de balayage apparaissant au-dessus de la ligne de base et formant deux ensembles de lignes parallèles, chaque ensemble étant orthogonal par rapport à l'autre, un ensemble étant à un angle ($\alpha$) par rapport audit bord vertical;

la production d'une première image de séparation à partir des signaux de points d'analyse dérivés dudit champ qui tombent sur ladite zone dudit original, chaque signal étant adapté pour former un élément d'impression et les éléments d'impression étant respectivement coïncidants avec les points d'analyse dudit champ qui tombent sur ladite image, de sorte que ladite image est reproduite sur ladite image de séparation;

la répétition des étapes mentionnées ci-dessus, une pour chaque couleur restante, en utilisant la ligne de base identique et en commençant l'analyse au point identique auquel le premier programme d'analyse a commencé mais la seconde image de séparation différent de la première en ce que l'angle relatif audit bord vertical du second champ est un certain angle ($\alpha$) différent du premier angle mentionné ($\alpha$) de sortie qu'il existe une disposition angulaire prédéterminée dudit ensemble de lignes parallèles de la première image se séparation par rapport à l'ensemble correspondant de lignes parallèles de ladite seconde image de séparation caractérisé en ce que

des mouvements dans deux directions (X, Y), l'un (X) est axial et unidirectionnel et l'autre (Y) est sensiblement perpendiculaire à l'axe et également unidirectionnel de telle façon que des lignes perpendiculaires consécutives de mouvement sont tracées par ledit faisceau qui sont espacées d'un second espacement ($l_2$) à des distances égales sur toute la longeur du cylindre, chaque ligne de mouvement perpendiculaire étant un cercle entier dudit cylindre (1);

lesdits points d'analyse ayant un certain premier espacement ($l_1$) les uns par rapport aux autres et le premier point de chaque ligne perpendiculaire qui est défini par le faisceau passant audelà de la ligne de base pour commencer l'analyse ayant un certain troisième espacement ($l_3$) au-dessus de ladite ligne de base, un quatrième espacement (a) existe entre les lignes de chaque ensemble et ledit quatrième espacement étant égal pour les deux ensembles, les premier, second et quatrième espacements ($l_1$, $l_2$, a) n'étant pas nécessairement égaux entre eux mais tous ces espacements étant constants pour ce programme particulier et le troisième espacement ($l_3$) n'étant pas nécessairement le même pour les lignes perpendiculaires différentes et étant lié à l'ordre selon lequel une ligne perpendiculaire déterminée est analysée par rapport aux lignes perpendiculaires adjacentes, la relation étant donnée par des rapports trigonométriques et géométriques qui tiennent compte des espacements différents et dudit angle, le quatrième espacement (a) de tous les champs étant égal et les dimensions des images de séparation ayant les mêmes dimensions proportionnelles que les champs, les dimensions correspondantes des champs étant égales, respectivement, les relations trigonométriques et géométriques étant exprimées comme suit:

A.   $tg\alpha = \dfrac{u}{v}$

avec les conditions:
    $0 \leqslant \alpha \leqslant 90°$
    $u \geqslant 0$ et nombre entier
    $v \geqslant 0$ et nombre entier
    $u{-}v$ est minimum

B.   $l_1 = a\sqrt{u^2 + v^2}$

C.   $l_2 = \dfrac{a}{\sqrt{u^2 + v^2}}$

D.   $l_3 = \beta l_1$ avec $\beta = m{-}$nombre entier (m)

et $m = \dfrac{np}{u^2 + v^2}$

et $p = su + tv$ et $t = \dfrac{sv + 1}{u}$

avec les conditions:
    $p \geqslant 0$ et nombre entier
    $s \geqslant 0$ et nombre entier
    $t \geqslant 0$ et nombre entier
    $s{-}t$ est minimum
    $0 \leqslant n \leqslant u^2 + v^2$ et nombre entier.

Fig: 2.

FIG: 2.

FIG:3.

*FIG: 4.*

Fig. 5.